# EUROPÄISCHE PATENTSCHRIFT

(11) **EP 0 561 214 B1**
(45) Veröffentlichungstag und Bekanntmachung des Hinweises auf die Patenterteilung: **10.07.1996**
(21) Anmeldenummer: 93103365.8
(22) Anmeldetag: 03.03.1993
(51) Int. Cl.: C08F 8/32, C10L 1/22, C10M 133/54, C10M 133/58

(54) **Diaminoalkane, Verfahren zu deren Herstellung sowie Kraftstoffe und Schmierstoffe, enthaltend die Diaminoalkane**
Diaminoalkanes, process for their manufacture and fuels and lubricants containing these diaminoalkanes
Diaminoalcanes, leur procédé de préparation et combustibles et lubrifiants contenant des diaminoalcanes

(30) Priorität: 19.03.1992 DE 4208756
(43) Veröffentlichungstag der Anmeldung: 22.09.1993
(73) Patentinhaber: BASF Aktiengesellschaft, D-67063 Ludwigshafen (DE)
(72) Erfinder: Mohr, Juergen, Dr., W-6718 Gruenstadt (DE); Oppenlaender, Knut, Dr., W-6700 Ludwigshafen (DE); Franz, Lothar, Dr., W-6704 Mutterstadt (DE); Schreyer, Peter, Dr., W-6940 Weinheim (DE); Thomas, Juergen, Dr., W-6701 Fussgoenheim (DE)

(56) Entgegenhaltungen:
- EP-A- 0 476 485
- WO-A-90/08787
- DE-A- 3 611 230
- US-A- 4 156 061

## Beschreibung

Die Erfindung betrifft Diaminoalkane, ein Verfahren zu deren Herstellung sowie Kraftstoffe für Verbrennungsmotoren und Schmierstoffe, enthaltend geringe Mengen an den Diaminoalkanen.

Vergaser und Einlaßsysteme von Ottomotoren, aber auch Einspritzsysteme für die Kraftstoffdosierung in Otto- und Dieselmotoren werden in zunehmenden Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Die Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (vgl. z.B.: M. Rossenbeck in Katalysatoren, Tenside, Mineralöladditive, Hrsg. J. Falbe, u. Hasserodt, S. 223 f., G. Thieme Verlag, Stuttgart 1978).

Je nach Wirkungsweise aber auch nach dem bevorzugten Wirkort solcher Detergens-Additive unterscheidet man heute zwei Generationen.

Die erste Additiv-Generation konnte nur die Bildung von Ablagerungen im Ansaugsystem verhindern, nicht aber bereits vorhandene Ablagerungen wieder entfernen, wohingegen die Additive der zweiten Generation beides bewirken können ("keep-clean-" und "clean-up-Effekt") und zwar aufgrund ihrer hervorragenden Thermostabilität, insbesondere auch an Zonen höherer Temperaturen, nämlich an den Einlaßventilen.

Das molekulare Bauprinzip von Kraftstoff-Detergenzien kann verallgemeinernd angegeben werden als Verknüpfung polarer Strukturen mit meist höhermolekularen, unpolaren oder liphophilen Resten.

Vertreter der zweiten Additiv-Generation sind oft Produkte auf der Basis von Polyisobutenen im unpolaren Molekülteil. Hier wiederum sind Additive vom Polyisobutylamin-Typ besonders hervorzuheben. Polyisobutylamine erhält man, ausgehend von Polyisobutenen, im wesentlichen nach zwei Verfahren. Das erste verläuft über eine Chlorierung des polymeren Grundkörpers und anschließenden nukleophilen Ersatz durch Amine oder vorzugsweise Ammoniak. Der Nachteil dieses Verfahrens ist die Verwendung von Chlor und das Auftreten von Chlor- oder Chlorid-haltigen Produkten, die keinesfalls mehr erwünscht sind und daher vermieden werden sollen (DE-OS 22 45 918).

Im zweiten Verfahren wird ein reaktives Polyisobuten zunächst in einer Oxosynthese carbonyliert und danach in Anwesenheit von Ammoniak aminierend hydriert (DE-OS 36 11 230).

Aus der nicht vorveröffentlichen DE-40 30 164 sind Polyisobutylaminoalkohole bekannt, die aus Polyisobutenen über eine Epoxidierung und Umsetzung mit Aminen hergestellt werden. Bei dieser Herstellung ist aufgrund der Anwesenheit von Wasser die Bildung von Diolen als unerwünschten Nebenprodukten nicht auszuschließen.

Obgleich die oben genannten Kraftstoffdetergenzien auch eine gewisse Dispergierwirkung aufweisen können, bestand die Aufgabe, Zusätze vorzuschlagen, die sich durch besonders hohe Dispergierwirkung auszeichnen und ohne unerwünschte Nebenprodukte herstellbar sind.

Diese Aufgabe wird gelöst mit Diaminoalkanen der allgemeinen Formeln Ia und Ib 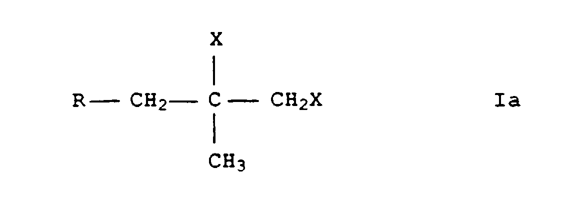 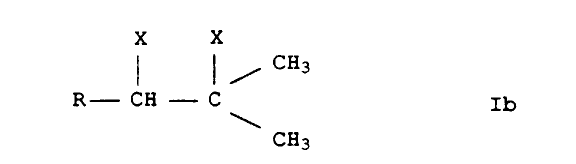 in der
- R: einen aliphatischen, Alkyl-Seitengruppen aufweisenden Kohlenwasserstoffrest mit einem Molekulargewicht (Zahlenmittel) von 250 bis 5000 und der Rest X eine Gruppe 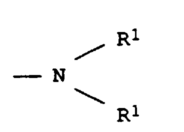 bedeutet, wobei die Reste R¹ gleich oder verschieden sein können und Wasserstoff, C₁-C₁₀-Alkyl, C₁-C₈-Hydroxyalkyl oder C₁-C₈-Aminoalkyl bedeuten, oder in denen die beiden Reste R¹ einen nicht-aromatischen Ring bilden können.

Von diesen Verbindungen sind solche bevorzugt, bei denen R ein von Isobuten und 0 bis 30 Gew.-% n-Buten abgeleiteter Polybutyl- oder Polyisobutylrest ist und/oder bei denen beide R¹ unabhängig voneinander Wasserstoff oder C₁-C₃-Alkyl bedeuten.

Bei den Alkyl-Seitengruppen im Rest R handelt es sich bevorzugt um verzweigte oder unverzweigte Alkyl-Reste mit 1 bis 30, insbesondere mit 1 bis 4 C-Atomen.

Die Aufgabe wird weiterhin durch Kraftstoffe oder Schmierstoffe gelöst, welche die erfindungsgemäßen Diaminoalkane in als Dispergiermittel und Detergens wirksamen Mengen enthalten.

Die erfindungsgemäßen Diaminoalkane werden den Kraftstoffen im allgemeinen in Mengen von 50 bis 5000, vorzugsweise 100 bis 2000 ppm, und den Schmierölen im allgemeinen in Mengen von 0,5 bis 10, vorzugsweise 1 bis 5 Gew.-%, bezogen auf das Schmieröl, zugesetzt.

Die neuen Additive verwendet man in Kraftstoffen vorzugsweise zusammen mit an sich bekannten Polyisobutylaminen der Formel 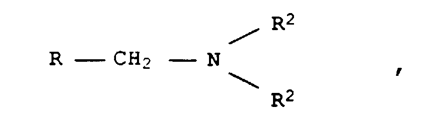 in der R ein von Isobuten und 0 bis 30 Gew.-% n-Buten abgeleiteter Polybutyl- oder Polyisobutylrest und R² Wasserstoff, C₁-C₁₀-Alkyl oder C₁-C₈-Aminoalkyl, das noch durch weitere Aminogruppen tragende C₁-C₆-Alkylreste substituiert sein kann, bedeutet, um sowohl einen sehr guten Detergens- als auch Dispergiereffekt zu erzielen.

Die erfindungsgemäßen Diaminoalkane werden zweckmäßig durch Epoxidierung der entsprechenden Polyalkylene und anschließender nukleophiler Epoxidöffnung mit Ammoniak oder Aminen erhalten, verbunden mit einer Ammoniak- bzw. Aminanlagerung im Sinne einer reduktiven Aminierung.

Zu diesem Zweck wird zunächst ein reaktives Polyalkylen, z.B. Polyisobuten, mittels bekannter Epoxidierungsreagenzien und gegebenenfalls Katalysatoren (Peressigsäure, m-Chlorperbenzoesäure, Hydroperoxiden und ähnlichen Reagenzien) in das entsprechende Epoxid überführt (vgl. z.B.: G. Dittius in Houben-Weyl, Bd. 6/3, 4. Aufl., S. 385 f., G. Thieme Verl. Stuttgart 1965, oder D. Swern, Org. React. Vol. VII, 378 f (1953)). Diese Epoxide werden dann durch Reaktion mit NH₃ und/oder entsprechenden Aminen unter den Bedingungen der reduktiven Aminierung in die Diaminoalkane überführt.

Die eingesetzten reaktiven Polyalkylene werden durch Polymerisation von geradkettigen oder verzweigten C₂-C₃₀-, bevorzugt C₂-C₆-, insbesondere C₂-C₄-Olefinen hergestellt, wobei die Polymerisation so geführt wird, daß der Kettenabbruch zu einer Doppelbindung führt (z.B. durch kationische oder koordinative Polymerisation).

Die Polyalkylene können Homopolymere oder Copolymere sein. Ethylen wird nur zur Herstellung von Copolymeren eingesetzt, um eine ausreichende Kraftstofflöslichkeit der letztlich resultierenden Diaminoalkane zu gewährleisten.

Als Olefine werden bevorzugt 1-Alkene eingesetzt, insbesondere Propylen, 1-Buten, Isobuten oder Gemische dieser Olefine.

Die verwendeten Polyalkylene haben ein mittleres Molekulargewicht zwischen 250 und 5000, vorzugsweise zwischen 800 und 1500. Sie werden nach bekanntem Verfahren durch kationische Polymerisation von z.B. Isobuten erhalten, wobei nach Abbruch der Polymerkette im zuletzt eingebauten Monomeren eine Doppelbindung verbleibt (vgl. z.B.: DE-OS 27 02 604 und EP-A 0 145 235).

Diese Doppelbindung wird nach an sich bekannten Methoden epoxidiert. Die Epoxidierung eines Polyisobutens z.B. mittels m-Chlorperbenzoesäure ist von J.P. Kennedy u.a., J. Polym. Sci.: Polym. Chem. Ed., Vol. 20, 2809 bis 2817 (1982), beschrieben.

Sehr hohe Ausbeuten an Epoxid erhält man auch, indem man das Polyalkylen mit Hydroperoxiden, z.B. t-Butylhydroperoxid, in Anwesenheit von Übergangsmetallkatalysatoren, (Molybdän-, Wolframsalze oder -komplexe) in unter den Reaktionsbedingungen inerten Lösungsmitteln oder in Substanz umsetzt.

Die nach den oben erwähnten Verfahren erhaltenen Epoxide werden unter den an sich bekannten Bedingungen der reduktiven Aminierung zu den Diaminen umgesetzt. Die Aminierungsreaktion wird zweckmäßig bei Temperaturen von 80 bis 200°C und Wasserstoffdrucken bis 600 bar, vorzugsweise 80 bis 300 bar, in Gegenwart üblicher Hydrierungskatalysatoren, wie z.B. Raney-Nickel oder Raney-Kobalt, durchgeführt.

Besonders bevorzugt wird zur Aminierung NH₃ eingesetzt.

Bei der bevorzugten Reaktion mit NH₃ können auch Aminohydroxyalkane, d.h. Verbindungen der allgemeinen Formeln Ia und Ib, in denen ein Rest X eine OH-Gruppe und der andere Rest X eine NH₂-Gruppe bedeutet, entstehen und isoliert werden, wenn z.B. die Reaktionstemperatur gesenkt und/oder die Reaktionszeit verkürzt wird.

Es ist auch möglich, die Epoxide zunächst zu den entsprechenden Diolen z.B. Säure-katalysiert zu hydrolysieren, das Diol zu isolieren und es dann ebenfalls unter den Bedingungen der reduktiven Aminierung zu den erfindungsgemäßen Diaminen umzusetzen. Auch hierbei können als Zwischenprodukte Aminoalkohole auftreten.

Man erhält so, ausgehend von den entsprechenden Epoxiden, Diaminoalkane, die in ihren physikalischen Eigenschaften ähnlich den Ausgangsverbindungen sind. Neben der Wirksamkeit als Detergenzien und Dispergatoren im Einlaßsystem verfügen die erfindungsgemäß zuzusetzenden Umsetzungsprodukte mit NH₃ und/oder Aminen auch dispergierende Eigenschaften im Motorenöl, was mit chromatographischen Tests nachgewiesen werden kann, während sich z.B. die bereits bekannten Polyisobutylamine allenfalls ölschlamm-neutral verhalten.

Die Prüfung der Produkte als Kraftstoffadditive, besonders auf ihre Eignung als Ventil- und Vergaserreiniger, geschieht mit Hilfe von Motortests, die in Prüfstandsversuchen mit einem 1,2 l Opel-Kadett-Motor gemäß CEC-F-02-T-79 durchgeführt werden.

Die zur Charakterisierung der Diaminoalkane bzw. der entsprechenden Aminoalkohole herangezogene Aminzahl wurde nach DIN 16 945, die Hydroxylzahl nach DIN 53 240 bestimmt.

### Beispiele

1. Epoxidierung von Polyisobuten
Eine Lösung von 100 g eines reaktiven Polyisobutens mit dem Molgewicht Mₙ = 950 (hergestellt nach DE-OS 27 02 604), 81 g t-Butylhydroperoxid/t-Butanol (1:1) und 0,7 g Molybdänethylhexanoat in Cyclohexanol (Mo-Gehalt 6,6 %) wird eine Stunde auf 80°C danach noch 2 Stunden auf 90°C erhitzt. Man trennt nach Abkühlen die beiden Phasen voneinander und wäscht die Polyisobuten-Phase ggf. mit Wasser und verdünnter Natriumhydrogencarbonat-Lösung.
Flüchtige Bestandteile und Leichtsieder werden anschließend bei 80°C im Wasserstrahlvakuum entfernt.
Es verbleiben 102,6 g eines öligen Rückstands, der nach volumetrischer Titration (Analyt. Chem. 36, 667 (1964)) über 95 % Epoxid enthält. Die Bildung des Epoxids kann ¹H- und ¹³C-NMR-spektroskopisch verfolgt werden.
2. Umsetzung des Epoxids mit Ammoniak
a) 150 g des Epoxids werden in 300 g Cyclohexan gelöst und 20 g Raney-Nickel zugesetzt. Im Autoklaven wird nach Zugabe von 500 ml Ammoniak bei einem Wasserstoffdruck von 250 bar 3 h auf 210°C erhitzt. Im Vakuum werden die leichtflüchtigen Bestandteile am Rotationsverdampfer abgezogen. Die Aminzahl des Produkts liegt bei 10,2, die Hydroxylzahl bei 11,8. Daraus ergibt sich ein Aminierungsgrad von 46 %; d.h. es liegt ein Aminoalkohol vor.
b) 150 g des Epoxids werden in 300 g Cyclohexan gelöst und 20 g Raney-Nickel zugesetzt. Im Autoklaven wird nach Zugabe von 1000 ml Ammoniak bei einem Wasserstoffdruck von 280 bar 8 h auf 220°C erhitzt. Im Vakuum werden die leichtflüchtigen Bestandteile am Rotationsverdampfer abgezogen. Die Aminzahl des Produkts liegt bei 21,9, die Hydroxylzahl bei 1,7. Daraus ergibt sich ein Aminierungsgrad von 93 %, d.h. es liegt nahezu quantitativ das Polyisobutyldiamin vor.

3. Ergebnisse von Motortests, Prüfung als Ventilreiniger im Opel-Kadett 1,2 l-Motor

| | Ablagerung [mg]* Ventil-Nr. | | | |
|---|---|---|---|---|
| | 1 | 2 | 3 | 4 |
| Grundwert | 368 | 467 | 314 | 583 |
| Umsetzungsprodukt aus Beispiel 2b) | 0 | 0 | 0 | 1 |

| | | | | |
|---|---|---|---|---|
| * nach CEC-F-02-T-79 | | | | |

## Patentansprüche

1. Kraftstoffe oder Schmierstoffe, enthaltend geringe Mengen an Verbindungen der Formeln Ia und/oder Ib 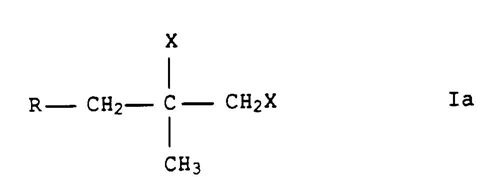 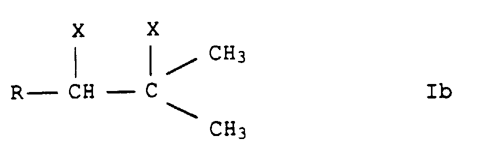 in denen
R einen aliphatischen, Alkyl-Seitengruppen aufweisenden Kohlenwasserstoffrest mit einem Molekulargewicht (Zahlenmittel) von 250 bis 5000 und der Rest X die Gruppe 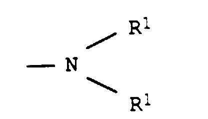 wobei die Reste R¹ gleich oder verschieden sein können und Wasserstoff, C₁-C₁₀-Alkyl, C₁-C₈-Hydroxyalkyl oder C₁-C₈-Aminoalkyl bedeuten, oder in denen die beiden Reste R¹ einen nicht-aromatischen Ring bilden können.

2. Kraftstoffe oder Schmierstoffe nach Anspruch 1, dadurch gekennzeichnet, daß R ein von Isobuten und 0 bis 30 Gew.-% n-Buten abgeleiteter Polybutyl- oder Polyisobutylrest ist.

3. Kraftstoffe oder Schmierstoffe nach Anspruch 1, dadurch gekennzeichnet, daß R¹ Wasserstoff bedeutet.

4. Kraftstoffe nach Anspruch 1, dadurch gekennzeichnet, daß sie 50 bis 5000 ppm der Verbindungen der Formeln Ia und/ oder Ib enthalten.

5. Schmierstoffe nach Anspruch 1, dadurch gekennzeichnet, daß sie 0,5 bis 10 Gew.-% der Verbindungen der Formeln Ia und/oder Ib enthalten.

6. Kraftstoffe nach Anspruch 1, dadurch gekennzeichnet, daß sie neben den Verbindungen der Formel I Kraftstoff-Detergenzien der Formel 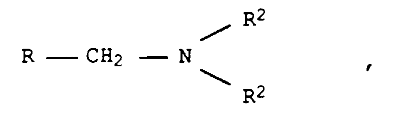 enthalten, in der R die in Anspruch 2 angegebene Bedeutung hat und R² Wasserstoff oder C₁-C₁₀-Alkyl oder C₁-C₈-Aminoalkyl, das noch durch weitere Aminogruppen tragende C₁-C₆-Alkylreste substituiert sein kann, bedeutet.

7. Diaminoalkane der allgemeinen Formeln Ia und Ib 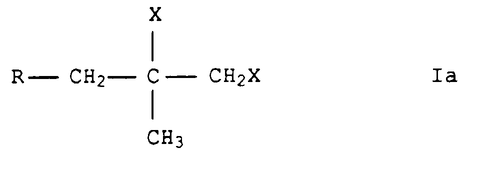 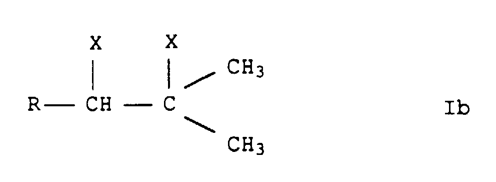 in denen
R einen aliphatischen, Alkyl-Seitengruppen aufweisenden Kohlenwasserstoffrest mit einem Molekulargewicht (Zahlenmittel) von 250 bis 5000 und der Rest X die Gruppe 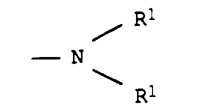 bedeutet, wobei die Reste R¹ gleich oder verschieden sein können und Wasserstoff, C₁-C₁₀-Alkyl, C₁-C₈-Hydroxyalkyl oder C₁-C₈-Aminoalkyl bedeuten, oder in denen die beiden Reste R¹ einen nicht-aromatischen Ring bilden können.

8. Diaminoalkane nach Anspruch 7, dadurch gekennzeichnet, daß R ein von Isobuten und 0 bis 30 Gew.-% n-Buten abgeleiteter Polybutyl- oder Polyisobutylrest ist.

9. Diaminoalkane nach Anspruch 7, dadurch gekennzeichnet, daß R¹ Wasserstoff bedeutet.

10. Verfahren zur Herstellung der Diaminoalkane nach Anspruch 7, dadurch gekennzeichnet, daß man
a) Polyalkene mittels an sich bekannter Epoxidierungsreagenzien und gegebenenfalls Katalysatoren in die entsprechenden Epoxide überführt und
b) diese Epoxide durch Reaktion mit Ammoniak und/oder Aminen unter den Bedingungen der reduktiven Aminierung in die Diaminoalkane überführt.

## Claims

1. A fuel or lubricant containing small amounts of compounds of the formulae Ia and/or Ib 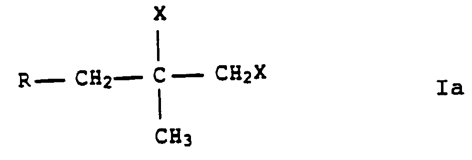 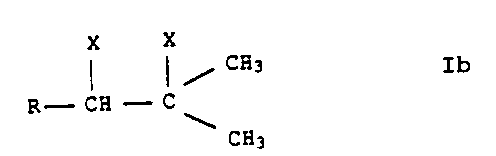 where R is an aliphatic hydrocarbon radical having alkyl side groups and a number average molecular weight of from 250 to 5,000 and X is 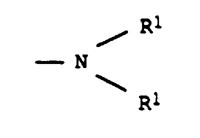 where the radicals R¹ may be identical or different and are each hydrogen, C₁-C₁₀-alkyl, C₁-C₈-hydroxyalkyl or C₁-C₈-aminoalkyl, or where the two radicals R¹ may form a nonaromatic ring.

2. A fuel or lubricant as claimed in claim 1, wherein R is a polybutyl or polyisobutyl radical derived from isobutene and from 0 to 30% by weight of n-butene.

3. A fuel or lubricant as claimed in claim 1, wherein R¹ is hydrogen.

4. A fuel as claimed in claim 1, which contains from 50 to 5,000 ppm of compounds of the formulae Ia and/or Ib.

5. A lubricant as claimed in claim 1, which contains from 0.5 to 10% by weight of compounds of the formulae Ia and/or Ib.

6. A fuel as claimed in claim 1, which contains, in addition to the compounds of the formula I, a fuel detergent of the formula 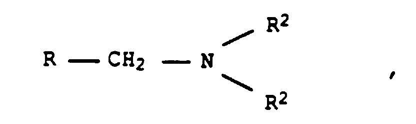 where R has the meanings stated in claim 2 and R² is hydrogen or C₁-C₁₀-alkyl or C₁-C₈-aminoalkyl which may be substituted by further amino-carrying C₁-C₆-alkyl radicals.

7. A diaminoalkane of the formula Ia or Ib 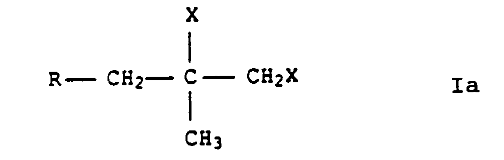 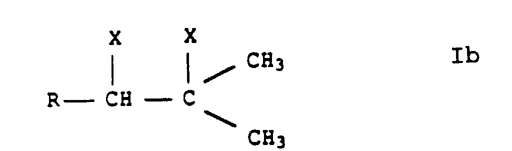 where R is an aliphatic hydrocarbon radical having alkyl side groups and a number average molecular weight of from 250 to 5,000 and X is 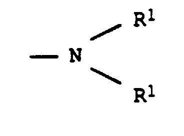 where the radicals R¹ may be identical or different and are each hydrogen, C₁-C₁₀-alkyl, C₁-C₈-hydroxyalkyl or C₁-C₈-aminoalkyl, or where the two radicals R¹ may form a nonaromatic ring.

8. A diaminoalkane as claimed in claim 7, wherein R is a polybutyl or polyisobutyl radical derived from isobutene and from 0 to 30% by weight of n-butene.

9. A diaminoalkane as claimed in claim 7, wherein R¹ is hydrogen.

10. A process for the preparation of a diaminoalkane as claimed in claim 7, wherein
a) a polyalkene is converted by means of a conventional epoxidation reagent and, if required, a catalyst into the corresponding epoxide and
b) this epoxide is converted into the diaminoalkane by reaction with ammonia and/or an amine under the conditions of reductive amination.

## Revendications

1. Carburants ou lubrifiants, qui contiennent de faibles proportions de composés des formules Ia et/ou Ib : 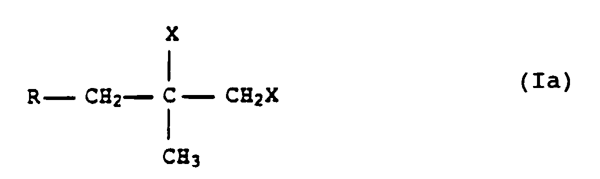 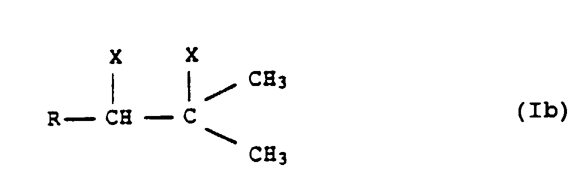 dans lesquelles
R représente un reste d'hydrocarbure présentant des radicaux latéraux du type alkyle aliphatique, d'un poids moléculaire (moyenne en nombre) de 250 à 5000 et le substituant X représente le radical : 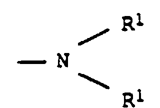 où les symboles R¹ ont des significations identiques ou différentes et représentent chacun un atome d'hydrogène, un radical alkyle en C₁-C₁₀, hydroxyalkyle en C₁-C₈, ou aminoalkyle en C₁-C₈, où les deux symboles R¹ peuvent représenter un noyau non aromatique.

2. Carburants ou lubrifiants selon la revendication 1, caractérisés en ce que le symbole R représente un radical polybutyle ou polyisobutyle dérivé de l'isobutène et de 0 à 30% en poids du n-butène.

3. Carburants ou lubrifiants selon la revendication 1, caractérisés en ce que le symbole R¹ représente un atome d'hydrogène.

4. Carburants selon la revendication 1, caractérisés en ce qu'ils contiennent de 50 à 5000 ppm des composés des formules Ia et/ou Ib.

5. Lubrifiants selon la revendication 1, caractérisés en ce qu'ils contiennent de 0,5 à 10% en poids des composés des formules Ia et/ou Ib.

6. Carburants selon la revendication 1, caractérisés en ce qu'ils contiennent, outre les composés de la formule I, des détergents pour carburants de la formule : 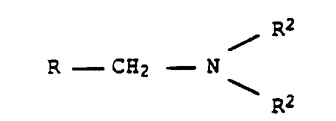 dans laquelle le symbole R possède les significations qui lui ont été attribuées dans la revendication 2, et R² représente un atome d'hydrogène ou un radical alkyle en C₁-C₁₀ ou aminoalkyle en C₁-C₈, qui peut encore être substitué par des radicaux alkyle en C₁-C₆ portant des radicaux amino supplémentaires.

7. Diaminoalcanes des formules générales Ia et Ib : 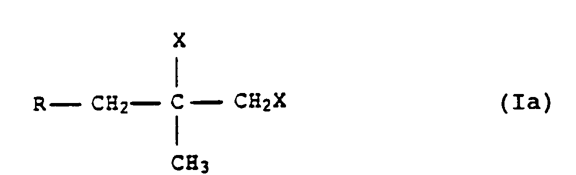 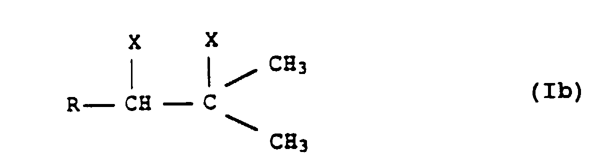 dans lesquelles
R représente un reste d'hydrocarbure présentant des radicaux latéraux du type alkyle aliphatique, d'un poids moléculaire (moyenne en nombre) de 250 à 5000 et le substituant X représente le radical : 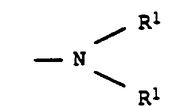 où les symboles R¹ ont des significations identiques ou différentes et représentent chacun un atome d'hydrogène, un radical alkyle en C₁-C₁₀, hydroxyalkyle en C₁-C₈, ou aminoalkyle en C₁-C₈, où les deux symboles R¹ peuvent représenter un noyau non aromatique.

8. Diaminoalcanes selon la revendication 7, caractérisés en ce que le symbole R représente un radical polybutyle ou polyisobutyle dérivé de l'isobutène et de 0 à 30% en poids du n-butène.

9. Diaminoalcanes selon la revendication 7, caractérisés en ce que le symbole R¹ représente un atome d'hydrogène.

10. Procédé de préparation des diaminoalcanes selon la revendication 7, caractérisé en ce que
a) on convertit des polyalcènes en les époxydes correspondants à l'aide de réactifs d'époxydation connus et éventuellement de catalyseurs, et
b) on convertit ces époxydes en les diaminoalcanes par réaction avec l'ammoniac et/ou des amines dans les conditions de l'amination réductrice.
